# EUROPEAN PATENT APPLICATION

(11) **EP 4 814 348 A1**
(43) Date of publication of application: **30.09.2026**
(21) Application number: 24961769.7
(22) Date of filing: 27.11.2024
(51) Int. Cl.: F16K 1/36, B65D 83/48

(54) **VALVE FOR PRESSURE PACKAGING DEVICE**

(71) Applicant: Anhui Goodwill Precision Components Co., Ltd., Xuancheng, Anhui 242000 (CN)
(72) Inventor: HONG, Changxing, Xuancheng, Anhui 242000 (CN)
(74) Representative: Loo, Chi Ching
(86) International application number: PCT/CN2024/134791
(87) International publication number: WO 2026/112813

(57) **Abstract**

The present disclosure relates to the field of valve technology, and more specifically, to a valve for a pressure packaging device, including a sealing plug structure and a valve stem structure assembled within the sealing plug structure, wherein a first annular sealing structure on the valve stem structure is in abutting sealing engagement with a second annular sealing structure within the sealing plug structure, and the first annular sealing structure is located between the second annular sealing structure and a feed port of the valve stem structure. By the abutting limit of the first annular sealing structure against the second annular sealing structure, the second annular sealing structure of the sealing plug structure is prevented from sliding below the first annular sealing structure of the valve stem structure, ensuring that the sealing plug structure always remains in the correct position, thereby ensuring the sealing effect. Furthermore, through the close fit between the first annular sealing structure and the second annular sealing structure, the gap between the sealing plug structure and the valve stem structure is reduced, improving sealing performance.

## Description

### TECHNICAL FIELD

The present disclosure relates to the field of valve technology, and more specifically, to a valve for a pressure packaging device.

### BACKGROUND

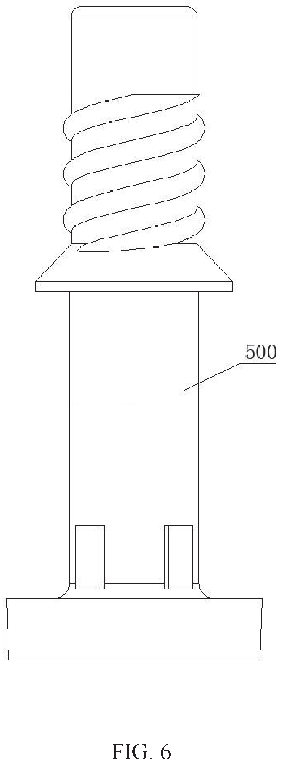

In the process of house construction or renovation, there are often gaps around doors and windows, expansion joints of components, and holes that need to be filled, sealed, and bonded, requiring the use of expanding foam. Expanding foam is a moisture-curing polyurethane elastic sealing foam material. Generally, expanding foam is pressurized and filled into a metal container, and then sealed by a valve. This valve not only needs to have reliable switching performance but also needs to ensure pressure resistance and sealing performance. However, the structural design of existing pressure packaging device valves makes their sealing parts relatively weak. Specifically, in the prior art, the contact between the valve stem 500 and the inner wall of the sealing plug is a smooth straight pipe structure, as shown in FIG. 6, which prevents effective sealing between them and the inner wall of the sealing plug. This may lead to leakage and other sealing failures during use, making it impossible to guarantee the storage period of the product, thereby causing waste.

### SUMMARY

The technical problem to be solved by the present disclosure is to overcome the shortcomings of the prior art and provide a valve for a pressure packaging device.

The technical solution adopted by the present disclosure is:

A valve for a pressure packaging device, including: a sealing plug structure and a valve stem structure assembled within the sealing plug structure, wherein a first annular sealing structure on the valve stem structure is in abutting sealing engagement with a second annular sealing structure within the sealing plug structure, and the first annular sealing structure is located between the second annular sealing structure and a feed port of the valve stem structure.

Further, the first annular sealing structure includes: an annular sealing rib provided on the valve stem structure, wherein a pressing inclined surface is provided at a contact point between the annular sealing rib and the second annular sealing structure.

Further, the second annular sealing structure includes: an annular engaging rib provided on an inner wall of the sealing plug structure, wherein the pressing inclined surface of the annular sealing rib is in abutting sealing engagement with a lower surface of the annular engaging rib.

Further, an end of the sealing plug structure inserted into the interior of the pressure packaging device is provided with an annular sealing portion for sealingly cooperating with a lower surface of a cup sealing structure, and an end of the inner wall of the sealing plug structure near the annular sealing portion is provided with a variable diameter groove.

Further, the variable diameter groove gradually increases from an end away from the annular sealing portion to an end adjacent to the annular sealing portion, and a plurality of feed ports of the valve stem structure are located inside the variable diameter groove.

Further, the valve stem structure is provided with a stepped sealing portion configured to be in abutting sealing engagement with a side surface of the annular sealing portion away from the cup sealing structure, wherein an inner sealing structure is formed between an upper surface of the stepped sealing portion and a lower surface of the annular sealing portion.

Further, an outer end of the upper surface of the stepped sealing portion is provided with an annular transition surface, wherein the annular transition surface is arranged opposite to an adhesive guiding inclined surface on the lower surface of the annular sealing portion.

Further, it also includes: a cup sealing structure for sealingly connecting an opening of the pressure packaging device; wherein the valve stem structure is assembled and connected within the cup sealing structure, and the sealing plug structure is assembled between the valve stem structure and the cup sealing structure; the cup sealing structure includes: a cup sealing body, wherein a central mounting hole for cooperating with and connecting the sealing plug structure is provided at the center of the cup sealing body, and an annular assembly groove for wrapping and connecting an inner wall and an outer wall of the opening of the pressure packaging device is provided on an outer side of the cup sealing body.

Further, the annular assembly groove is a bottom-open flared structure formed by the cup sealing body being folded from inside to outside, and a sealing gasket is assembled between the annular assembly groove and the opening of the pressure packaging device.

From the above solution, it can be seen that, compared with the valves in the prior art, the present disclosure has the following beneficial effects:

In the valve for a pressure packaging device of the present disclosure, by the abutting limit of the first annular sealing structure against the second annular sealing structure, the second annular sealing structure of the sealing plug structure is prevented from sliding below the first annular sealing structure of the valve stem structure, ensuring that the sealing plug structure always remains in the correct position, thereby ensuring the sealing effect. Furthermore, through the close fit between the first annular sealing structure and the second annular sealing structure, a tighter fit is formed between the sealing plug structure and the valve stem structure, reducing the gap between the sealing plug structure and the valve stem structure, thereby improving sealing performance.

To make the above objectives, features, and advantages of the present disclosure more obvious and understandable, preferred embodiments are described in detail below with reference to the accompanying drawings.

### BRIEF DESCRIPTION OF THE DRAWINGS

The drawings are provided to facilitate a further understanding of the present disclosure and constitute a part of the specification. Together with the embodiments of the present disclosure, they are used to explain the present disclosure and do not constitute a limitation of the present disclosure. In the drawings:
FIG. 1 is a schematic diagram of a valve for a pressure packaging device according to an embodiment of the present disclosure;
FIG. 2 is a first assembly diagram of a valve and a pressure packaging device according to an embodiment of the present disclosure;
FIG. 3 is a second assembly diagram of a valve and a pressure packaging device according to an embodiment of the present disclosure;
FIG. 4 is a schematic diagram of a valve stem structure according to an embodiment of the present disclosure;
FIG. 5 is a structural schematic diagram of a sealing plug structure according to an embodiment of the present disclosure;
FIG. 6 is a schematic diagram of a valve stem in the prior art according to an embodiment of the present disclosure;
FIG. 7 is an assembly schematic diagram of a valve stem structure and a sealing plug structure according to an embodiment of the present disclosure;
FIG. 8 is a partially enlarged view of part A in FIG. 7.

In the figures: cup sealing structure 100; valve stem structure 200; first annular sealing structure 201; stepped sealing portion 202; annular transition surface 203; feed port 204; sealing plug structure 300; second annular sealing structure 301; annular sealing portion 302; variable diameter groove 303; annular groove 304; adhesive guiding inclined surface 305; and pressure packaging device 400.

### DETAILED DESCRIPTION OF THE EMBODIMENTS

The technical solutions in the embodiments of the present disclosure will be clearly and completely described below with reference to the accompanying drawings in the embodiments of the present disclosure. Obviously, the described embodiments are only a part of the embodiments of the present disclosure, rather than all of the embodiments. Based on the embodiments in the present disclosure, all other embodiments obtained by those skilled in the art without creative effort shall fall within the protection scope of the present disclosure.

It should be understood that terms such as "have", "comprise", and "include" used herein, do not exclude the presence or addition of one or more other elements or combinations thereof.

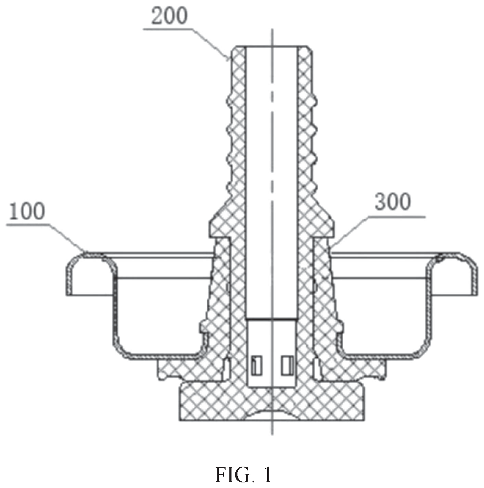

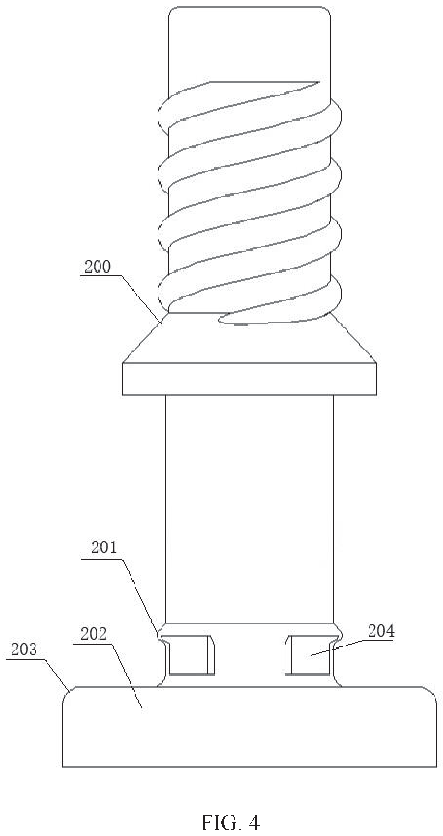

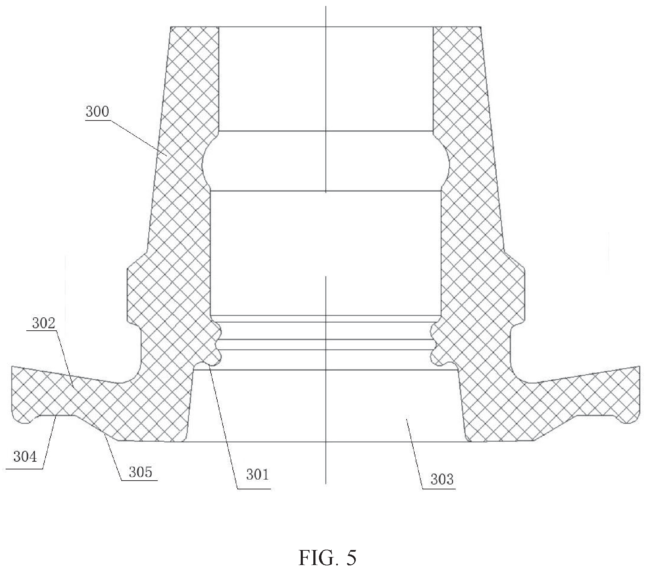

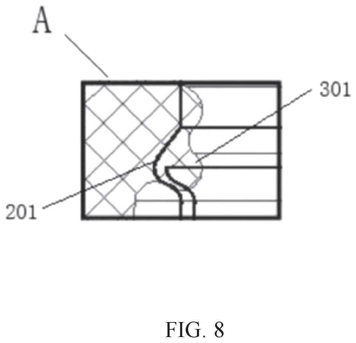

Referring to FIGS. 1-8, the present disclosure provides a valve for a pressure packaging device, including: sealing plug structure 300 and valve stem structure 200 assembled within the sealing plug structure 300, wherein first annular sealing structure 201 on the valve stem structure 200 is in abutting sealing engagement with second annular sealing structure 301 within the sealing plug structure 300, and the first annular sealing structure 201 is located between the second annular sealing structure 301 and feed port 204 of the valve stem structure 200.

In the valve for a pressure packaging device of the present disclosure, the first annular sealing structure 201 is provided on the valve stem structure 200, and the first annular sealing structure 201 is in abutting sealing engagement with the second annular sealing structure 301 from below within the sealing plug structure 300. Through the abutting limit of the first annular sealing structure 201 against the second annular sealing structure 301, the second annular sealing structure 301 of the sealing plug structure 300 is prevented from sliding below the first annular sealing structure 201 of the valve stem structure 200, ensuring that the sealing plug structure 300 always remains in the correct position, thereby ensuring the sealing effect. Furthermore, through the close fit between the first annular sealing structure 201 and the second annular sealing structure 301, a tighter fit is formed between the sealing plug structure 300 and the valve stem structure 200, reducing the gap between the sealing plug structure 300 and the valve stem structure 200, thereby improving sealing performance.

The valve for a pressure packaging device of the present disclosure further includes: cup sealing structure 100 for sealingly connecting an opening of the pressure packaging device; wherein the valve stem structure 200 is assembled and connected within the cup sealing structure 100, and the sealing plug structure 300 is assembled between the valve stem structure 200 and the cup sealing structure 100; the cup sealing structure 100 includes: a cup sealing body, wherein a central mounting hole for cooperating with and connecting the sealing plug structure 300 is provided at the center of the cup sealing body, and an annular assembly groove for wrapping and connecting an inner wall and an outer wall of the opening of the pressure packaging device 400 is provided on an outer side of the cup sealing body. The annular assembly groove is a bottom-open flared structure formed by the cup sealing body being folded from inside to outside, and sealing gasket 600 is assembled between the annular assembly groove and the opening of the pressure packaging device 400. When the cup sealing body is connected to the opening of the pressure packaging device 400, the side wall of the cup sealing body is expanded by the internal clamping jaws of a sealing machine, causing the outer end of the cup sealing body to form a bottom-open flared structure by being folded from inside to outside. This flared structure cooperates with the inner and outer walls of the opening of the pressure packaging device 400. The expanded flared structure will create a downward pulling force that presses the sealing gasket 600 between the annular assembly groove and the opening of the pressure packaging device 400, ensuring sealing performance.

In the present disclosure, the first annular sealing structure 201 includes: an annular sealing rib provided on the valve stem structure 200, wherein a pressing inclined surface is provided at a contact point between the annular sealing rib and the second annular sealing structure 301; one technical solution for the second annular sealing structure 301 is that the second annular sealing structure 301 includes: an annular engaging rib provided on an inner wall of the sealing plug structure 300, wherein the pressing inclined surface of the annular sealing rib is in abutting sealing engagement with a lower surface of the annular engaging rib; by the pressing inclined surface of the annular sealing rib being in abutting sealing engagement with the lower surface of the annular engaging rib, a tight fit is formed, ensuring that the sealing plug structure 300 does not undergo relative movement due to external pressure or vibration, forming surface contact or line contact between the sealing plug structure 300 and the valve stem structure 200, increasing the contact area, thereby improving the sealing effect. In summary, the design of the above technical solution can reduce leakage problems caused by movement or loosening of the sealing plug structure 300, improving product reliability and service life.

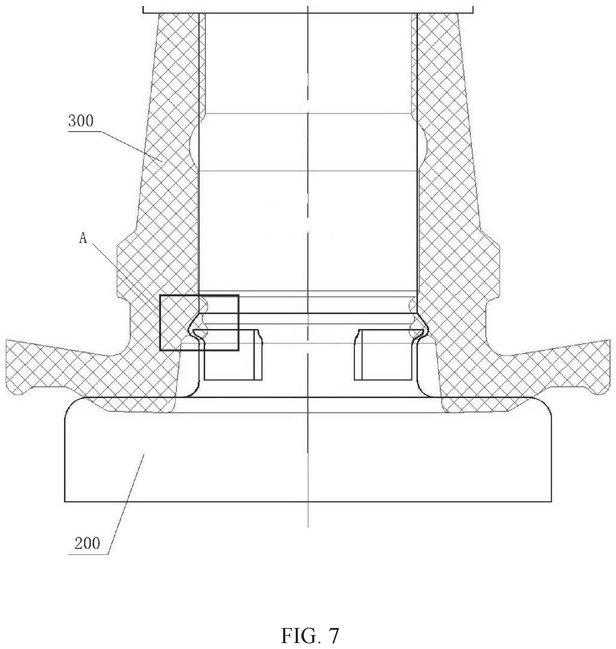

The connection state of the first annular sealing structure 201 and the second annular sealing structure 301 is shown by the structure circled at mark A in FIG. 7. To make the connection form more intuitively visible, both the first annular sealing structure 201 and the second annular sealing structure 301 are in a free state. When the first annular sealing structure 201 and the second annular sealing structure 301 are controlled to abut each other during installation, the first annular sealing structure 201 and the second annular sealing structure 301 generate an interference fit, pressing tightly against each other, thereby ensuring the sealing effect.

In the present disclosure, another technical solution for the second annular sealing structure 301 is that the second annular sealing structure 301 includes: an annular engaging groove provided on an inner wall of the sealing plug structure 300, wherein the pressing inclined surface of the annular sealing rib is in abutting sealing engagement with an inclined groove surface of the annular engaging groove. The design of the annular engaging groove and the pressing inclined surface creates a tight contact between the sealing plug structure 300 and the annular sealing rib, increasing the contact area and sealing pressure, thereby improving sealing performance. The design of the pressing inclined surface allows for automatic position adjustment during the sealing process, ensuring a tight fit between the annular sealing rib and the annular engaging groove, adapting to different working conditions and pressure changes, enhancing sealing reliability. The design of the annular engaging groove simplifies the installation process of the sealing structure, making it easier to align and install the sealing plug structure 300 and the annular sealing rib, improving assembly efficiency. The tight contact and stable sealing performance reduce wear on the sealing part, extending the service life of the sealing structure. Furthermore, the pressing inclined surface, through contact with the inclined groove surface, uniformly transfers external pressure to the inner wall of the sealing plug structure 300, increasing sealing pressure and improving the sealing effect.

An end of the sealing plug structure 300 inserted into the interior of the pressure packaging device 400 is provided with annular sealing portion 302 for sealingly cooperating with a lower surface of the cup sealing structure 100, and an end of the inner wall of the sealing plug structure 300 near the annular sealing portion 302 is provided with variable diameter groove 303. The annular sealing portion 302 is used for sealingly cooperating with the lower surface of the cup sealing structure 100. By increasing the contact area, the annular sealing portion 302 uniformly transfers external pressure to the lower surface of the cup sealing structure 100, forming an annular sealing contact surface, which increases the contact area and sealing pressure, thereby improving the overall sealing performance, reducing gaps, and preventing liquid or gas leakage. An end of the inner wall of the sealing plug structure 300 near the annular sealing portion 302 is provided with variable diameter groove 303. The variable diameter groove 303 gradually increases from an end away from the annular sealing portion 302 to an end adjacent to the annular sealing portion 302. A plurality of feed ports 204 of the valve stem structure 200 are located inside the variable diameter groove 303. This structural arrangement is configured such that, when it is necessary to press out the liquid material inside the pressure packaging device 400, the valve stem structure 200 is pressed downward. The valve stem structure 200 compresses the sealing plug structure 300, causing the top portion of the sealing plug structure 300 to deform. After the plurality of feed ports 204 of the valve stem structure 200 enter the inner chamber of the pressure packaging device 400, the liquid material inside the pressure packaging device 400 can more easily enter the plurality of feed ports and then flow into the medium channel of the valve stem structure 200 through the plurality of feed ports. Especially when the size of the plurality of feed ports entering the pressure packaging device 400 is controlled to be small, a conical guide groove is formed between the plurality of feed ports 204 of the valve stem structure 200 and the variable diameter groove 303, which facilitates the entry of the liquid material.

The valve stem structure 200 is provided with stepped sealing portion 202 configured to be in abutting sealing engagement with a side surface of the annular sealing portion 302 away from the cup sealing structure 100, wherein an inner sealing structure is formed between an upper surface of the stepped sealing portion 202 and the lower surface of the annular sealing portion 302. The multi-level contact between the stepped sealing portion 202 and the annular sealing portion 302 forms a mechanical lock, ensuring a stable cooperation between the valve stem structure 200 and the sealing plug structure 300. This creates multi-level sealing contact between the valve stem structure 200 and the annular sealing portion 302, increasing the contact area and sealing pressure, significantly improving sealing performance. The upper surface of the stepped sealing portion 202 and the lower surface of the annular sealing portion 302 fit tightly, forming an inner sealing structure. The multi-level design of the stepped sealing portion 202 uniformly transfers external pressure to the lower surface of the annular sealing portion 302, increasing sealing pressure, reducing gaps and leakage paths, and ensuring the sealing effect. Multi-level sealing is achieved through a single stepped sealing portion, reducing structural complexity and assembly difficulty. The structure of the stepped sealing portion 202 can adapt to different sizes of the annular sealing portion 302 within a certain range, increasing product versatility.

An outer end of the upper surface of the stepped sealing portion 202 is provided with annular transition surface 203, wherein the annular transition surface 203 cooperates with adhesive guiding inclined surface 305 on the lower surface of the annular sealing portion 302 to form an adhesive outlet for dispensing adhesive.

The annular transition surface 203 is a rounded surface or a chamfered surface, the purpose of which is to cooperate with the adhesive guiding inclined surface 305 on the lower surface of the annular sealing portion 302 to form an adhesive outlet that facilitates the flow of liquid material from inside the pressure packaging device 400 to the plurality of feed ports 204 of the valve stem structure 200. The size of the adhesive outlet formed by the annular transition surface 203 and the adhesive guiding inclined surface 305 gradually decreases from outside to inside, causing the flow rate of the liquid material to gradually increase as it flows towards the feed ports 204. When the stepped sealing portion 202 and the annular sealing portion 302 are controlled to separate to press out the liquid material, the flow resistance during pressing out is reduced, allowing the liquid material to pass more smoothly through the gap between the stepped sealing portion 202 and the annular sealing portion 302. The liquid material flows more smoothly, improving the efficiency of pressing out the liquid material, and resulting in a better dispensing effect when the valve is actuated.

The lower surface of the annular sealing portion 302 is also provided with annular groove 304, to facilitate assembly with automated equipment. When the valve stem structure 200 and the sealing plug structure 300 are press-fitted, the central valve stem structure 200 needs to be pressed into the sealing plug structure 300. However, their fit is an interference fit, and the bottom surface of the sealing plug structure 300 is relatively thin, which makes press-fitting very difficult during assembly. If a sleeve is used directly for press-fitting, because the edge of the sealing plug structure 300 has no force point, the sealing plug structure 300 is very prone to falling off during press-fitting, leading to inaccurate and inefficient press-fitting. In the present disclosure, annular groove 304 is provided on the lower surface of the annular sealing portion 302, so that when the sleeve is press-fitted, the connection point between the sleeve and the annular sealing portion 302 has a force point. The sleeve presses into the annular groove 304 on the lower surface of the annular sealing portion 302, making it difficult for the two to detach during press-fitting, thereby ensuring the press-fitting effect of the valve stem structure 200 and the sealing plug structure 300, which can solve the problem of difficulty in assembling the valve stem structure 200 and the sealing plug structure 300 in the prior art.

Furthermore, the annular groove 304 on the lower surface of the annular sealing portion 302 is connected to the adhesive guiding inclined surface 305, making it easier for the press-fitting equipment (such as a sleeve) to align with the annular groove 304 during press-fitting and reducing wear on the edge of the annular groove 304 during docking.

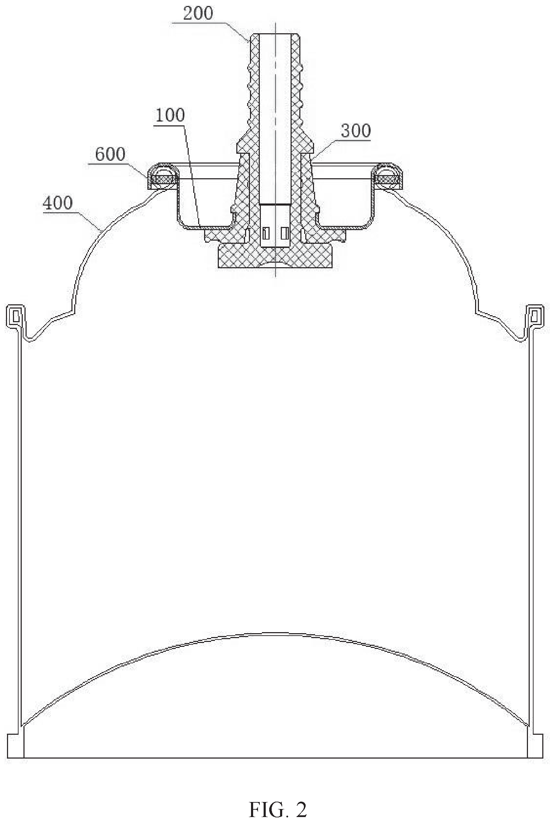

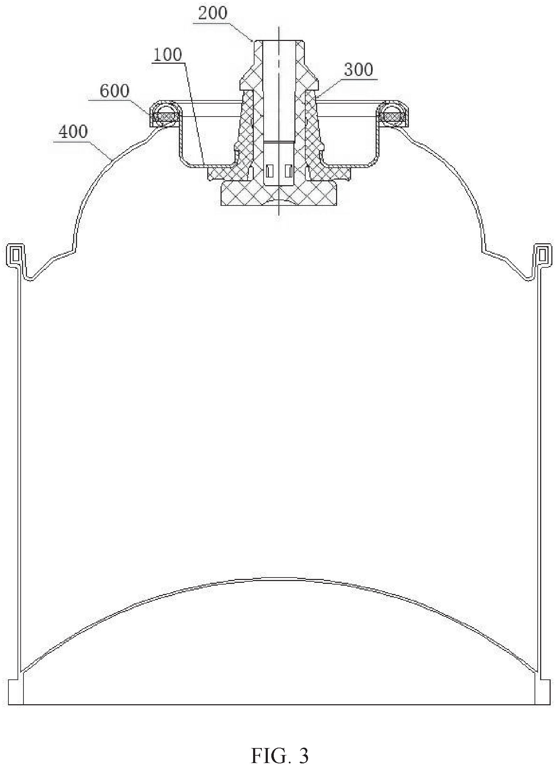

The valve stem structure 200 can be a gun-type valve stem or a tube-type valve stem, making it suitable for different application scenarios. FIG. 2 is an assembly diagram of a valve with a tube-type valve stem and a pressure packaging device; FIG. 3 is an assembly diagram of a valve with a gun-type valve stem and a pressure packaging device.

In the valve for a pressure packaging device of the present disclosure, the valve stem structure 200 is processed by mixing a valve stem base material and glass fiber material. The valve stem base material is a base powder material in the prior art, which will not be elaborated here, such as Ni-Mn-Mo low alloy steel powder. By adding glass fiber material to the valve stem base material and mixing it, the processed valve stem structure 200 has enhanced strength, which can significantly improve the mechanical strength and rigidity of the valve stem, enabling it to withstand higher stress and load. Moreover, because the valve stem structure 200 contains glass fiber material, it has good high-temperature resistance and a low coefficient of thermal expansion, allowing it to maintain stable mechanical properties in high-temperature environments, improving fatigue resistance, reducing fatigue damage caused by long-term use or repeated stress, and reducing material expansion and deformation caused by temperature changes, ensuring that the valve stem structure 200 can maintain a tight closed state during operation, preventing valve clogging. By improving the mechanical strength, thermal stability, and fatigue resistance of the valve stem structure 200, maintenance and replacement costs are reduced.

In the valve for a pressure packaging device of the present disclosure, the original sealing plug structure has been modified, reducing the amount of material used for the new sealing plug and decreasing the permeable area of the sealing part of the sealing plug, thereby reducing gas permeation and consequently lowering the leakage rate of the valve.

In the description of the present disclosure, it should be understood that terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., indicate orientations or positional relationships based on the orientations or positional relationships shown in the drawings, and are only for convenience in describing and simplifying the present disclosure, and do not indicate or imply that the device or element referred to must have a specific orientation or be constructed and operated in a specific orientation, and therefore cannot be understood as a limitation of the present disclosure.

In the present disclosure, unless otherwise clearly specified and defined, terms such as "install", "connected", "connect", "fixed", etc., should be broadly understood. For example, it can be a fixed connection, or a detachable connection, or an integral connection; it can be a mechanical connection, or an electrical connection or communicable with each other; it can be directly connected, or indirectly connected through an intermediate medium, or it can be an internal communication between two elements or an interaction relationship between two elements, unless otherwise clearly defined. For those skilled in the art, the specific meaning of the above terms in the present disclosure can be understood according to specific circumstances.

Although the embodiments of the present disclosure have been disclosed as above, they are not limited to the applications listed in the specification and embodiments. They can be fully applied to various fields suitable for the present disclosure. For those familiar with the art, other modifications can be easily made. Therefore, without departing from the general concept defined by the claims and their equivalents, the present disclosure is not limited to the specific details and illustrations shown and described herein.

## Claims

1. A valve for a pressure packaging device, comprising: a sealing plug structure (300) and a valve stem structure (200) assembled within the sealing plug structure (300), wherein a first annular sealing structure (201) on the valve stem structure (200) is in abutting sealing engagement with a second annular sealing structure (301) within the sealing plug structure (300), and the first annular sealing structure (201) is located between the second annular sealing structure (301) and a feed port (204) of the valve stem structure (200).

2. The valve for the pressure packaging device according to claim 1, wherein the first annular sealing structure (201) comprises: an annular sealing rib provided on the valve stem structure (200), wherein a pressing inclined surface is provided at a contact point between the annular sealing rib and the second annular sealing structure (301).

3. The valve for the pressure packaging device according to claim 2, wherein the second annular sealing structure (301) comprises: an annular engaging rib provided on an inner wall of the sealing plug structure (300), wherein the pressing inclined surface of the annular sealing rib is in abutting sealing engagement with a lower surface of the annular engaging rib.

4. The valve for the pressure packaging device according to claim 1, wherein an end of the sealing plug structure (300) inserted into an interior of the pressure packaging device (400) is provided with an annular sealing portion (302) for sealingly cooperating with a lower surface of a cup sealing structure (100), and an end of the inner wall of the sealing plug structure (300) near the annular sealing portion (302) is provided with a variable diameter groove (303).

5. The valve for the pressure packaging device according to claim 4, wherein the variable diameter groove (303) gradually increases from an end away from the annular sealing portion (302) to an end adjacent to the annular sealing portion (302), and a plurality of feed ports (204) of the valve stem structure (200) are located inside the variable diameter groove (303).

6. The valve for the pressure packaging device according to claim 5, wherein the valve stem structure (200) is provided with a stepped sealing portion (202) configured to be in abutting sealing engagement with a side surface of the annular sealing portion (302) away from the cup sealing structure (100), and an inner sealing structure is formed between an upper surface of the stepped sealing portion (202) and a lower surface of the annular sealing portion (302).

7. The valve for the pressure packaging device according to claim 6, wherein an outer end of the upper surface of the stepped sealing portion (202) is provided with an annular transition surface (203), and the annular transition surface (203) cooperates with an adhesive guiding inclined surface (305) on the lower surface of the annular sealing portion (302) to form an adhesive outlet for dispensing adhesive.

8. The valve for the pressure packaging device according to claim 1, further comprising: a cup sealing structure (100) for sealingly connecting an opening of the pressure packaging device (400); wherein the valve stem structure (200) is assembled and connected within the cup sealing structure (100), and the sealing plug structure (300) is assembled between the valve stem structure (200) and the cup sealing structure (100).

9. The valve for the pressure packaging device according to claim 8, wherein the cup sealing structure (100) comprises: a cup sealing body, wherein a central mounting hole for cooperating with and connecting the sealing plug structure (300) is provided at a center of the cup sealing body, and an annular assembly groove for wrapping and connecting an inner wall and an outer wall of the opening of the pressure packaging device (400) is provided on an outer side of the cup sealing body.

10. The valve for the pressure packaging device according to claim 9, wherein the annular assembly groove is a bottom-open flared structure formed by the cup sealing body being folded from inside to outside, and a sealing gasket is assembled between the annular assembly groove and the opening of the pressure packaging device (400).
